# EUROPÄISCHE PATENTSCHRIFT

(11) **EP 1 426 635 B1**
(45) Veröffentlichungstag und Bekanntmachung des Hinweises auf die Patenterteilung: **02.11.2006**
(21) Anmeldenummer: 03104515.6
(22) Anmeldetag: 03.12.2003
(51) Int. Cl.: F16B 37/08

(54) **Befestigungssystem**
Fastening system
Système de fixation

(30) Priorität: 05.12.2002 DE 10256861
(43) Veröffentlichungstag der Anmeldung: 09.06.2004
(73) Patentinhaber: HILTI Aktiengesellschaft, 9494 Schaan (LI)
(72) Erfinder: Herb, Armin, 86974 Apfeldorf (DE)
(74) Vertreter: Wildi, Roland

(56) Entgegenhaltungen:
- DE-A- 2 061 408
- FR-A- 1 382 310
- GB-A- 558 302
- US-A- 2 789 458

## Beschreibung

### Technisches Gebiet

Die Erfindung betrifft ein Befestigungssystem zum Befestigen eines Stangenelements in einer Montageöffnung eines Bauteils, insbesondere zum Befestigen einer Gewindestange in einer Montageöffnung eines Hohlkörpers, der im Oberbegriff des Patentanspruchs 1 genannten Art.

### Stand der Technik

Derartige Befestigungssysteme werden beispielsweise bei Aufhängevorrichtungen für Leitungsstranginstallationen, wie Rohrleitungen oder dergleichen, zur Befestigung an sogenannten Montageschienen verwendet. Eine Gewindestange mit angeordneter Rohrschelle, sowie gegebenenfalls mit einem, bereits in die Rohrschelle eingelegtem Leitungsstrang, wird mittels des Befestigungssystems an der Montageschiene vorpositioniert. Anschliessend erfolgt eine Höhenjustierung der Gewindestange und mittels einer Schienenmutter und/oder einer Kontermutter wird diese ausgerichtet fixiert. Diese Endfixierung sollte spielfrei sein, damit hohe Lasten von dem Befestigungssystem übernommen werden können.

Es sind des Weiteren Befestigungssysteme bekannt, bei denen beim Klemmvorgang der Klemmbereich einer Spannzange in einen Konus gezogen wird. Mit diesen Befestigungssystemen können Gewindestangen einfach und mit hohem Lastniveau befestigt werden.

Nachteilig an der bekannten Lösung ist, dass sich beim Klemmvorgang ein axialer Versatz des zu klemmenden Teils, z. B. der Gewindestange ergibt. Infolge des axialen Versatzes ist keine genaue Höhenjustierung des ausgerichteten Stangenelements und somit eines daran befestigten Leitungsstrangs möglich.

Aus der US 2,789,458 A ist eine Schnellspannmutter mit einer Aufnahmehülse zur Aufnahme eines Stangenelementes und mit einem Betätigungselement bekannt. Die Aufnahmehülse weist Eingriffsmittel für den Eingriff an dem Stangenelement auf, wobei die Eingreifmittel mittels des Betätigungselementes radial von einer ersten Stellung zur Aufnahme des Stangenelementes in eine zweite Stellung zur Befestigung des Stangenelementes überführbar sind.

Aus der GB 558,302 ist eine mehrteilige Mutter für Klemmverbindungen mit einem hohlzylindrischen Gehäuse und einem koaxial angeordneten hohlzylindrischen Innenteil bekannt, die begrenzt teleskopartig zusammenschiebbar aber drehfest miteinander verbunden sind. Die inneren Kanten des Innenteils sind abgeschrägt. Der Innenteil ist längsgeteilt, wobei die beiden Hälften federbeaufschlagt zueinander distanziert sind und im zusammengeschobenen Zustand ein Innengewinde ausbilden.

Aus der FR 1,382,310 ist eine Schnellspannmutter mit einer zweiteiligen Aufnahmehülse zur Aufnahme eines Stangenelementes und mit einem die Aufnahmehülse bereichsweise umgebenden Betätigungselement bekannt. Die Aufnahmehülse weist Eingriffsmittel für den Eingriff an dem Stangenelement sowie in einem Winkel nach aussen abragende Schenkel auf. Durch axiales Versetzen des Betätigungselementes werden die Eingreifmittel radial von einer ersten Stellung zur Aufnahme des Stangenelementes in eine zweite Stellung zur Befestigung des Stangenelementes überführt. Mittels Drehen des Betätigungselementes wird die Schnellspannmutter gesichert.

Aus der DE 20 61 408 A ist eine Schnellmontagemutter mit einer dreifach axial geschlitzten Arbeitsmutter und mit einer Übermutter als Betätigungselement bekannt, wobei die Segmente der Arbeitsmutter Eingreifmittel für den Eingriff an dem Stangenelement aufweisen und mittels einem Federelement ringsymmetrisch distanziert sowie radial nach aussen gespreizt werden. Umgekantete Bögen des Federelementes verhindern ein Auseinanderfallen der Schnellmontagemutter im unverspannten Zustand. Mittels Verspannen der Übermutter werden die Segmente der Arbeitsmutter von der Aufnahmestellung in eine Befestigungsstellung überführt.

### Darstellung der Erfindung

Der vorliegenden Erfindung liegt die Aufgabe zugrunde, ein Befestigungssystem für Stangenelemente zu schaffen, das eine genaue Justierung des Stangenelements bei einem hohen Lastniveau der Befestigung ermöglicht.

Die Aufgabe ist durch die Merkmale des Anspruchs 1 gelöst. Gemäss der Erfindung hat ein Befestigungssystem zum Befestigen eines Stangenelements in einer Montageöffnung eines Bauteils, insbesondere zum Befestigen einer Gewindestange in einer Montageöffnung eines Hohlkörpers, eine Aufnahmehülse zur Aufnahme des Stangenelements. Die Aufnahmehülse weist Eingreifmittel für den Eingriff an dem Stangenelement auf. Die Aufnahmehülse ist mittels eines Betätigungselements zur Induzierung einer im Wesentlichen radialen Bewegung der Eingreifmittel der Aufnahmehülse von einer ersten Stellung zur Aufnahme des Stangenelements in eine zweite Stellung zur Befestigung des Stangenelements überführbar. Die Aufnahmehülse weist um in Setzrichtung des Befestigungssystems liegenden zumindest einen Halteabschnitt auf.

Das erfindungsgemässe Befestigungssystem wird in eine Montageöffnung des Bauteils eingeführt. Das Bauteil ist beispielsweise ein Konstruktionsteil einer Stahlkonstruktion, einer Holzkonstruktion oder einer Konstruktion aus Beton, wie z. B. eine Platte, Wand, Träger oder dergleichen. Das Stangenelement wird in die Aufnahmehülse grob justiert eingesteckt. Durch Betätigen des Betätigungselements werden die Eingreifmittel der Aufnahmehülse von der ersten Stellung in die zweite Stellung überführt und das Stangenelement durch die, an dem Stangenelement eingreifenden Eingreifmittel vorfixiert. Mit der im Wesentlichen radialen Bewegung der Eingreifmittel der Aufnahmehülse beim Wechsel von der ersten Stellung in die zweite Stellung erfolgt bei der Fixierung des Stangenelements mit dem erfindungsgemässen Befestigungssystem kein axialer Versatz des Stangenelements.

Die Eingreifmittel können beispielsweise als Vorsprünge an der Aufnahmehülse ausgebildet sein, die das Stangenelement in der zweiten Stellung klemmend verspannen. Dabei kann auch nur ein Vorsprung und eine flach ausgebildete Gegenfläche an der Aufnahmehülse als miteinander wirkende Eingreifmittel vorgesehen werden. Bei einem Stangenelement mit einer glatten Oberfläche weist zumindest eines der Eingreifmittel bevorzugt eine Beschichtung, z. B. eine Beschichtung auf Basis einer Gummimischung auf. Mit dieser Massnahme wird die Reibung zwischen der Aufnahmehülse und dem Stangenelement erhöht, was den Widerstand gegen ein Verrutschen des Stangenelements in dessen Längsachse unter Lasteinwirkung verbessert. Wird beispielsweise eine Gewindestange an dem Befestigungssystem fixiert, ist das Eingreifmittel vorzugsweise als Gewinde oder zumindest als ein Gewindeabschnitt ausgebildet, das oder der beim Verspannen des Befestigungssystems in das Gewinde der Gewindestange eingreifen kann.

Zum Nivellieren beispielsweise einer an dem Stangenelement befestigten Rohrleitung wird das Betätigungselement entgegen der ursprünglichen Bewegungsrichtung bewegt, wobei der Eingriff zwischen der Aufnahmehülse und dem Stangenelement gelockert wird. Die Rohrleitung wird ausgerichtet und das, in der Höhe justierte Stangenelement durch erneutes Betätigen in die ursprüngliche Bewegungsrichtung in der gewünschten Position fixiert. Da die Eingreifmittel der Aufnahmehülse beim Befestigungsvorgang in axialer Richtung des Stangenelements keine Bewegung relativ zum Bauteil ausführen, bleibt die Justierung der Rohrleitung beim Wechsel der Aufnahmehülse von der ersten Stellung in die zweite Stellung erhalten.

Beim Lösen des Betätigungsmittels wird nicht nur der Eingriff zwischen den Eingreifmitteln der Aufnahmehülse und dem Stangenelement gelockert, sondern auch die Klemmwirkung des Befestigungssystems mit dem Bauteil, in dem das Befestigungssystem verspannt wurde. Weist die Montageöffnung in dem Bauteil eine längliche Erstreckung auf, so kann nach dem Lösen des Befestigungssystems nicht nur das Stangenelement in der Höhe justiert, sondern auch das gesamte Befestigungssystem entlang der Längsachse der Montageöffnung umpositioniert werden. Mit der Verspannung des Betätigungselements wird neben dem Stangenelement auch das Befestigungssystem erneut am Bauteil fixiert.

Die Aufnahmehülse weist am, in Setzungsrichtung des Befestigungssystems liegenden Ende zumindest einen Halteabschnitt zum Hintergreifen des Bauteils und/oder eines Hintergreifteils auf. Der zumindest eine Halteabschnitt ist beispielsweise als ein, nach aussen gerichteter, zumindest bereichsweise am äusseren Umfang angeordneter Vorsprung ausgebildet. Der Vorsprung kann z. B. die Ausgestaltung eines Flanschabschnitts aufweisen, der zumindest einen Teil des Randes oder der Ränder der Montageöffnung in dem Bauteil hintergreift. Bevorzugt sind zwei, diametral gegenüberliegende Flanschabschnitte an der Aufnahmehülse vorgesehen, die in die Montageöffnung am Bauteil einführbar sind und nach einer Drehung der Aufnahmehülse um einen bestimmten Winkel, beispielsweise um 90°, die Ränder der Montageöffnung hintergreifen können. Die Funktionsweise der Halteabschnitte der Aufnahmehülse ist im Wesentlichen mit der Funktionsweise eines Hintergreifteils vergleichbar.

Vorzugsweise weist die Aufnahmehülse zumindest bereichsweise eine Stellfläche auf und das Betätigungselement weist zumindest bereichsweise eine Betätigungsfläche auf, wobei die Stellfläche mit der Betätigungsfläche in Eingriff bringbar ist zur Induzierung der im Wesentlichen radialen Bewegung der Eingreifmittel der Aufnahmehülse von der ersten Stellung in die zweite Stellung. Bevorzugt ist die Betätigungsfläche weitgehend über den gesamten Umfang des Betätigungselements geführt. Die Betätigungsfläche kann beispielsweise mit einer kleinen Steigung ausgebildet sein, so dass hohe Spannkräfte auf das, von der Aufnahmehülse gehaltene Stangenelement ausgeübt werden. Dies gewährleistet bei einem kleinen Weg des Betätigungselements eine sichere Befestigung des Stangenelements an dem Befestigungssystem.

Bevorzugt ist das Betätigungselement parallel zur Längsachse der Aufnahmehülse versetzbar. Die Eingreifmittel, der vorzugsweise in axialer Richtung der Aufnahmehülse weitgehend unverschieblichen Aufnahmehülse, werden durch das axial versetzbare Betätigungselement von der ersten Stellung in die zweite Stellung bewegt. Dabei erfolgt die Änderung der Stellungen im Wesentlichen ohne eine axiale Verschiebung der Aufnahmehülse und gewährleistet die Fixierung ohne einen axialen Versatz des Stangenelements.

Vorteilhafterweise umfasst das Bauteil eine C-förmige Montageschiene. Die Montageschiene wird beispielsweise mit einer, deren Seitenflächen an einem Untergrund befestigt. In der länglichen Montageöffnung kann das Befestigungssystem an einer Position in den die Montageschiene eingeführt werden. Durch Verschieben in der Montageöffnung entlang der Längsachse der Montageschiene wird das Befestigungssystem auf die gewünschte Position umpositioniert und dort durch Betätigen des Betätigungsmittels in dieser Position an der Montageschiene fixiert.

Bevorzugt umfasst das Befestigungssystem ein Hintergreifteil zum Einführen in eine Montageöffnung des Bauteils zum Hintergreifen von dem Bauteil, oder optional in, beziehungsweise an dem Bauteil vorgesehenen Halteelementen. Das Hintergreifteil weist vorzugsweise in einer ersten Richtung eine Erstreckung auf, die kleiner als die Breite der Montageöffnung ausgebildet ist um das Einführen des Befestigungssystems in die Montageöffnung des Bauteils zu ermöglichen. In der Richtung senkrecht zur ersten Richtung des Hintergreifteils ist die Erstreckung grösser als die Breite der Montageöffnung ausgebildet, so dass das Hintergreifteil nach dem Einführen in die Montageöffnung und dem Drehen des Hintergreifteils um einen bestimmten Winkel, beispielsweise um einen Winkel von 90°, zumindest einen Randbereich der Ränder der Montageöffnung im oder am Bauteil hintergreifen kann. Wird das Befestigungssystem an einer C-förmigen Montageschiene angeordnet, hintergreift das Hintergreifteil vorzugsweise die im Inneren der Montageschiene vorgesehenen Haltevorsprünge. An den Hintergreifbereichen zwischen dem Hintergreifteil und dem Bauteil kann ein Eingreifmittel, beispielsweise eine Rändelung, an dem Hintergreifteil und/oder dem entsprechenden Hintergreifbereich am Bauteil ausgebildet sein. Das Hintergreifteil ist vorzugsweise reibschlüssig oder kraftschlüssig mit der Aufnahmehülse verbunden, z. B. mittels einem Siegellack oder einer punktuellen Lötung.

Vorzugsweise umfasst das Befestigungssystem einen Anschlag zur stirnaussenseitigen Beaufschlagung des Bauteils, insbesondere der, eine Montageöffnung des Hohlkörpers begrenzende Ränder der Hohlkörperaussenseite. Der Anschlag kann im Kontaktbereich mit dem Betätigungselement mit einer Beschichtung zur Gewährleistung der Betätigbarkeit des Betätigungselements versehen sein, z. B. mit einer Teflonbeschichtung. Wird das Befestigungssystem beispielsweise an einer C-förmigen Montageschiene angeordnet, wird mit der Kombination des Anschlags mit dem Hintergreifteil der nötige Abstand des Hintergreifteils zum Aussenrand des Bauteils sichergestellt, so dass das Hintergreifteil in die Montageöffnung einführbar und im Innern der Montageschiene abdrehbar ist. Zu diesem Zweck ist die Aufnahmehülse drehbar in dem Anschlag angeordnet.

Zum sicheren Hintergreifen und gleichzeitigem bevorzugtem Fixieren des zu befestigenden Stangenelements erfolgt die Montage des Befestigungssystems vorzugsweise zweistufig. In einem ersten Schritt wird das Befestigungssystem in die Montageöffnung der Montageschiene eingeführt und beispielsweise um 90° abgedreht. Der Abstand zwischen dem Anschlag und dem Hintergreifteil beträgt in diesem Stadium der Montage etwas mehr als die Erstrekkung des Randes der Montageöffnung in axialer Richtung der Aufnahmehülse. Anschliessend wird das Betätigungselement betätigt, bis das Hintergreifteil mit den in der Montageschiene vorgesehenen Haltevorsprüngen verspannt ist. Im nächsten Schritt wird das Stangenelement in das Befestigungssystem eingeführt, in der Höhe justiert und mittels einer erneuten Betätigung des Betätigungselements fixiert. Durch Betätigen des Betätigungselements in Richtung entgegen der ursprünglichen Drehrichtung wird das Stangenelement sowie das Befestigungssystem verschiebbar gelöst. Um ein leichtes Einführen des Stangenelements, insbesondere bei einem kleinen Spielraum zwischen der, sich in der ersten Stellung zur Aufnahme des Stangenelements befindlichen Eingreifmittel der Aufnahmehülse und dem Stangenelement, zu gewährleisten, kann das Stangenelement bereits vor der Verspannung des Hintergreifteils mit dem Bauteil in die Aufnahmehülse eingeführt werden. Die Montage und die Fixierung des Stangenelements wird hierbei derart vereinfacht, dass der Anwender die Betätigung des Betätigungselements nicht mehr mehrstufig vornehmen muss.

Bevorzugt weist das Betätigungselement zu dessen axialen Versetzung ein Gewinde auf, das optional in ein Gewinde am Anschlag zusammenwirkt. Mit dem Gewinde erfolgt bei der Betätigung des Betätigungselements ein gesteuerter axialer Versatz des Betätigungselements. Dabei bestimmt die Steigung des Gewindes die Grösse dieses Versatzes. Das Gewinde des Betätigungsmittels wird z. B. mit einem, am Bauteil ausgebildeten Gewinde in Eingriff gebracht. Umfasst das erfindungsgemässe Befestigungssystem einen Anschlag zur stirnseitigen Beaufschlagung des Bauteils, ist vorzugsweise an diesem Anschlag ein, mit dem Gewinde des Betätigungsmittels in Eingriff bringbares Gewinde vorgesehen. Beispielsweise weist das Betätigungsmittel ein Aussengewinde und der Anschlag ein Innengewinde auf. Die Gewinde können als Links- oder Rechtsgewinde sowie metrisch oder zöllig ausgebildet sein. Beispielsweise am Bauteil oder am Anschlag können anstelle eines umlaufenden Gewindes auch nur Gewindeabschnitte angeordnet werden, in die das Gewinde des Betätigungselements eingreifen kann. Vorzugsweise sind bei dieser Variante zumindest zwei, bevorzugt drei radial gleichmässig verteilte Gewindeabschnitte vorgesehen.

In einer erfindungsgemässen Variante weist das Betätigungselement zur axialen Versetzung anstelle eines Gewindes eine Kurvenkontur auf, die optional mit einer, am Anschlag ausgebildeten Kurvenkontur zusammenwirkt. Über die Kurvenkontur erfolgt bei der Betätigung des Betätigungselements ein gesteuerter axialer Versatz des Betätigungselements. Dabei bestimmt die Ausgestaltung der Kurvenkontur die Grösse, beziehungsweise die Höhe und den Verlauf dieses Versatzes. Die Kurvenkontur des Betätigungsmittels gleitet beispielsweise auf der Oberfläche des Bauteils oder wird mit einer, am Bauteil ausgebildeten Kurvenkontur in Eingriff gebracht. Umfasst das erfindungsgemässe Befestigungssystem einen Anschlag zur stirnseitigen Beaufschlagung des Bauteils, ist vorzugsweise an diesem Anschlag ein, mit der Kurvenkontur des Betätigungsmittels in Eingriff bringbare Kurvenkontur vorgesehen.

Die Kurvenkontur kann beispielsweise mittels einer Verzahnung ausgebildet werden, wobei die einzelnen ineinandergreifenden Elemente mit unterschiedlichen Steigungen versehen sind. Der grosse Weg zum Schliessen, d. h. zum Überführen der Eingreifmittel der Aufnahmehülse von der ersten Stellung in die zweite Stellung wird über einen grossen Steigungswinkel erreicht. Zum Ausgleich der Gewindetoleranz zwischen dem Stangenelement, insbesondere bei der Anordnung einer Gewindestange, und den Eingreifmitteln an der Aufnahmehülse sowie zum Fixieren des Stangenelements schliesst sich an die grosse Steigung eine flache Steigung an. Mit der flachen Steigung kann die erforderliche Klemmkraft aufgebracht werden und ein selbstständiges Lösen der Klemmverbindung wird durch die Selbsthemmung der Verbindung verhindert.

In einer Variante dazu ist die Kurvenkontur durch Noppen gebildet, die in Vertiefungen und/oder Ausnehmungen eingreifen und durch Betätigen des Betätigungselements aus diesen Vertiefungen und/oder Ausnehmungen herauszwingen. Die Nocken gleiten anschliessend auf der entsprechenden Oberfläche des Bauteils, beziehungsweise des Anschlags. Beispielsweise sind die Noppen an dem Betätigungselement vorgesehen und das Bauteil oder der Anschlag weist komplementär zu den Noppen ausgebildete Vertiefungen und/oder Ausnehmungen auf. In Bewegungsrichtung des Betätigungselements weisen die Vertiefungen und/oder Ausnehmungen bevorzugt Abschrägungen auf, die ein Herausgleiten der Noppen aus den Vertiefungen und/oder Ausnehmungen bei der Betätigung des Betätigungselements erleichtern. Somit erfolgt auch bei diesen Ausführungsformen der Kurvenkontur ein axialer Versatz des Betätigungselements bei dessen Betätigung und die Eingreifmittel der Aufnahmehülse werden von der ersten Stellung in die zweite Stellung überführt.

Vorzugsweise ist die Stellfläche und/oder die Betätigungsfläche als ansteigende und/oder abfallende Fläche, optional als spiralförmig verlaufende Fläche, ausgebildet. Die ansteigende und/oder abfallende Fläche bietet den Vorteil, dass die Steigung der Stellfläche und/oder der Betätigungsfläche entlang deren Anordnung variiert werden kann. Beispielsweise weist die Stellfläche an der Aufnahmehülse eine gewisse Steigung auf und ist nur in einem Bereich der Aufnahmehülse ausgebildet. Das Betätigungsmittel weist z. B. eine mit der Stellfläche in Eingriff oder Überdeckung bringbare Betätigungsfläche auf. Die Betätigungsfläche weist an deren Anfang eine grosse Steigung zur Schaffung eines Eingriffs der Eingreifmittel der Aufnahmehülse an dem Stangenelement mit einer geringen Betätigung des Betätigungselements auf. An die Fläche mit einer grossen Steigung schliesst sich eine Fläche mit einer geringen Steigung zur Fixierung des Stangenelements mittels des Befestigungssystems an. Die ansteigende und/oder abfallende Fläche ist bevorzugt mit einer stetig variierenden Steigung ausgebildet, so dass die Kulisse eine spiralförmige Ausgestaltung aufweist.

Vorteilhafterweise weist die Stellfläche und/oder die Betätigungsfläche eine Schrägfläche auf, wobei optional die Stellfläche und die Betätigungsfläche komplementär zueinander ausgebildete Schrägflächen sind, zur Umsetzung einer axialen Bewegung des Betätigungselements in eine im Wesentlichen radiale Bewegung der Eingreifmittel der Aufnahmehülse. Die Betätigungsfläche weist beispielsweise im Wesentlichen die Ausgestaltung eines Innenkonus auf, die bei der Betätigung des Betätigungsmittels mit der Stellfäche an der Aufnahmehülse zusammenwirkt. Die Stellfläche kann im Wesentlichen die Form eines Aussenkonus aufweisen, wobei die, in dieser Kombination bevorzugt als Innenkonus ausgebildete Betätigungsfläche aussenseitig an den Aussenkonus der Stellfläche bei der Betätigung des Betätigungsmittels angreift und die Eingreifmittel der Aufnahmehülse bei dem, aus der Betätigung des Betätigungsmittels resultierenden, axialen Versatzes des Betätigungsmittels von der ersten Stellung in die zweite Stellung überführt.

Bevorzugt ist an dem Betätigungsmittel ein Drehmomentübertragungsmittel vorgesehen und optional ist das Betätigungsmittel aussenseitig an der Aufnahmehülse angeordnet. Das Drehmomentübertragungsmittel umfasst beispielsweise eine äussere Ausgestaltung analog einer Sechskantmutter, die mit einem handelsüblichen Schlüssel betätigbar ist. Ein Betätigen des Betätigungselements mit einem Schlüssel vermittelt dem Anwender ein hohes Sicherheitsgefühl. Durch die Anordnung des Betätigungselements an der Aussenseite der Aufnahmehülse ist das Betätigungselement leicht zugänglich und einfach betätigbar.

Vorteilhafterweise ist die Aufnahmehülse einteilig ausgebildet und weist zumindest einen, in Einführrichtung des Befestigungssystems verlaufenden Schlitz sowie zumindest einen federnden Steg auf. Optional umfasst die Aufnahmehülse ein Federelement zum Halten der Aufnahmehülse in der ersten Stellung. Vorzugsweise sind zwei, diametral gegenüberliegende Schlitze sowie zwei federnde Stege an der Aufnahmehülse vorgesehen. Zusätzlich kann ein Federring am gegenüberliegenden Ende angeordnet werden, der die Eingreifmittel der Aufnahmehülse in der ersten Stellung, der Stellung zur Aufnahme des Stangenelements hält. Diese Ausführung ist insbesondere dann vorteilhaft, wenn das Befestigungssystem mehrmals verspannt und entspannt wird, um Umpositionierungen des Befestigungssystems am Bauteil oder des Stangenelements im Befestigungssystem zu ermöglichen. Bei jedem Lösen des Befestigungssystems streben die Eingreifmittel der Aufnahmehülse infolge der Federwirkung des Federrings von der zweiten Stellung in die erste Stellung.

Anstelle der Anordnung des federnden Stegs im Bereich des in Setzungsrichtung des Befestigungssystem liegenden Endes kann der federnde Steg etwa auf halber Länge der Längserstreckung der Aufnahmehülse vorgesehen sein. Bei dieser Ausführungsform kann die Aufnahmehülse in Setzungsrichtung des Befestigungssystems keilförmig ausgeformt werden, so dass das Befestigungssystem mit einer, mit zumindest einem nach aussen gerichteten Vorsprung versehene Aufnahmehülse in die Montageöffnung des Bauteils einführbar ist. Beim Einführen des Stangenelements in die Aufnahmehülse wird diese derart aufgeweitet, dass der zumindest eine Vorsprung einen Bereich des Randes der Montageöffnung im Bauteil hintergreifen kann. Mittels Betätigung des Betätigungselements wird die Aufnahmehülse, beziehungsweise zumindest der eine Vorsprung, mit dem Bauteil verspannt.

In einer erfindungsgemässen Variante zu einer einteilig ausgebildeten Aufnahmehülse ist die Aufnahmehülse mehrteilig ausgebildet und die einzelnen Teile der Aufnahmehülse sind wenigstens mittels zumindest einem Federmittel verbunden, wobei die einzelnen Teile zueinander zur Schaffung zumindest eines Schlitzes beabstandet sind. Vorzugsweise sind zwei Federmittel an der zweiteiligen Aufnahmehülse vorgesehen, wobei das erste Federmittel die Aufnahmehülse am setzungsrichtungsseitigen Ende beispielsweise aussenseitig umfasst und das zweite Federmittel am gegenüberliegenden Ende der Aufnahmehülse innenseitig zum Halten der Eingreifmittel der Aufnahmehülse in der ersten Stellung vorgesehen ist. Die Federmittel umfassen beispielsweise Federringe, die z. B. mittels einer Löt- oder Schweissverbindung an den entsprechenden Teilen der Aufnahmehülse befestigt sind. Zur Schaffung federnder Verbindungsstege zwischen den einzelnen Teilen der mehrteiligen Aufnahmehülse werden beispielsweise im Bereich des, in Setzungsrichtung des Befestigungssystems liegenden Endes Laschen an zumindest einem der zueinander benachbarten Teile vorgesehen, die mit dem benachbarten Teil der Aufnahmehülse beispielsweise mittels einer Press-, Löt- oder Klebeverbindung miteinander verbunden werden.

Bevorzugt weist der Anschlag und/oder das Hintergreifteil zumindest ein Rastelement auf, wobei das Rastelement zur Verdrehsicherung der Elemente des Befestigungssystems zueinander mit dem zumindest einen Schlitz der Aufnahmehülse in Eingriff bringbar ist. Mittels dieser Rast-/Gegenrastverbindung ist die Aufnahmehülse verdrehsicher an dem entsprechenden Teil des Befestigungssystems gehalten.

Vorzugsweise sind die Elemente des Befestigungssystems aus Blech als Stanz-/Biegeteil gefertigt. Ein weiterer möglicher Werkstoff zur Herstellung der einzelnen Elemente des Befestigungssystems stellt ein, den Anforderungen entsprechender Kunststoff dar. Des Weiteren können zur Fertigung des Befestigungssystems unterschiedliche Werkstoffe in Kombination miteinander verwendet werden. Bei dieser Ausführungsform lassen sich die verschiedenen Materialeigenschaften der unterschiedlichen Werkstoffe für ein Befestigungssystem beispielsweise hinsichtlich der Produktionskosten, den technischen Anforderungen oder dergleichen optimieren.

Aus der nachfolgenden Detailbeschreibung und der Gesamtheit der Patentansprüche ergeben sich weitere vorteilhafte Ausführungsformen und Merkmalskombinationen der Erfindung.

### Kurze Beschreibung der Zeichnungen

Die Erfindung wird nachstehend anhand mehrerer Ausführungsbeispiele näher erläutert. Es zeigen:
- Fig. 1a, b: Jeweils einen Schnitt durch ein erstes Ausführungsbeispiel des erfindungsgemässen Befestigungssystems im offenen und im verspannten Zustand;
- Fig. 2: eine Ansicht auf das Befestigungssystem entlang der Linie II-II in Fig. 1b;
- Fig. 3a, b: jeweils einen Schnitt durch ein zweites Ausführungsbeispiel des erfindungsgemässen Befestigungssystems im offenen und im verspannten Zustand;
- Fig. 4a: eine Ansicht auf das Befestigungssystem entlang der Linie IVa-IVa in Fig. 3a;
- Fig. 4b: eine Ansicht auf das Befestigungssystem entlang der Linie IVb-IVb in Fig. 3b;
- Fig. 5: einen Detailschnitt nach der Linie V-V in Fig. 4a;
- Fig. 6: einen Schnitt durch ein weiteres Ausführungsbeispiel des erfindungsgemässen Befestigungssystems im verspannten Zustand;
- Fig. 7: einen Schnitt durch ein weiteres Ausführungsbeispiel des erfindungsgemässen Befestigungssystems im offenen Zustand;
- Fig. 8a-c: jeweils einen Schnitt durch ein Betätigungselement und einen Anschlag mit einer Kurvenkontur in drei verschiedenen Positionen des Betätigungselements;
- Fig. 9: einen Schnitt durch ein weiteres Ausführungsbeispiel des erfindungsgemässen Befestigungssystems im offenen Zustand; und
- Fig. 10: eine Ansicht auf das Befestigungssystem entlang der Linie X-X in Fig. 9.

Grundsätzlich sind in den Figuren gleiche Teile mit den gleichen Bezugszeichen versehen.

### Wege zur Ausführung der Erfindung

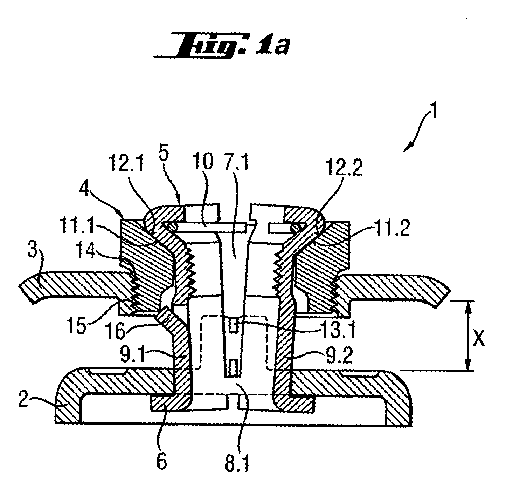

In Fig. 1a ist ein Schnitt durch ein erstes Ausführungsbeispiel des erfindungsgemässen Befestigungssystems im offenen Zustand, d. h. in der Stellung zur Aufnahme eines Stangenelements dargestellt. Am in Setzungsrichtung des Befestigungssystems 1 liegenden Ende ist ein Hintergreifteil 2 und eine, das Hintergreifteil 2 hintergreifende Aufnahmehülse 5 vorgesehen. Ein Anschlag 3 sowie ein Betätigungselement 4 sind an dem in Setzungsrichtung des Befestigungssystem 1 gegenüberliegenden Ende vorgesehen.

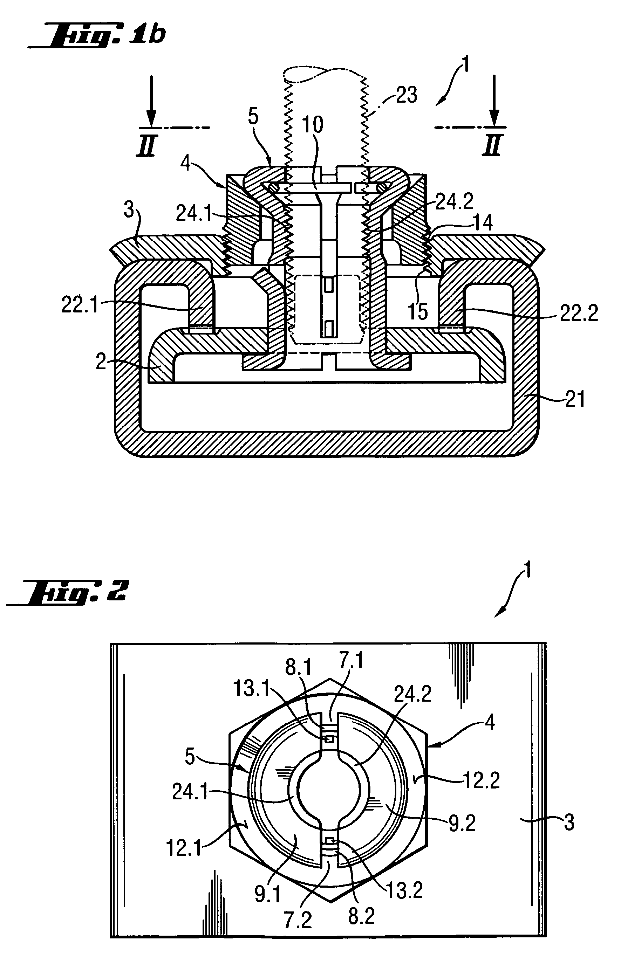

Die Aufnahmehülse 5 hintergreift das Hintergreifteil 2 mit dem Flansch 6. Die Aufnahmehülse 5 ist über den Flansch 6 beispielsweise mit Siegellack oder einer Lötung mit dem Hintergreifteil 2 verbunden. Die Aufnahmehülse 5 ist einteilg aus einem Blech gefertigt und weist zwei, diametral gegenüberliegende Schlitze 7.1 und 7.2 auf, die von dem in Setzungsrichtung abgewandten Ende des Befestigungssystems 1 in Richtung des anderen Ende des Befestigungssystems 1 verlaufen. Im Bereich von dem in Setzungsrichtung liegenden Ende ist jeweils ein federnder Steg 8.1 und 8.2 (hier nicht dargestellt) ausgebildet, der die beiden Teile 9.1 und 9.2 der Aufnahmehülse 5 schwenkbeweglich zueinander verbindet. An dem Hintergreifteil sind jeweils zwei Nocken 13.1 und 13.2 (siehe Fig. 2) angeordnet, die in den Schlitz 7.1, bzw. 7.2 eingreifen und eine Verdrehsicherung zwischen dem Hintergreifteil 2 und der Aufnahmehülse 5 schaffen.

Damit die Eingreifmittel (hier die Gewindeabschnitte 24.1 und 24.2) der Aufnahmehülse 5 und somit das Befestigungssystem 1 während dem Transport, der Lagerung und vor dem Setzen in den Bauteil in der ersten Stellung, der sogenannten Aufnahmestellung verbleibt, ist die Aufnahmehülse an dem, dem Flansch 6 gegenüberliegenden Ende nach innen umgebogen, so dass eine Aufnahme für den Federring 10 geschaffen ist. Des Weiteren ermöglicht der Federring 10 nach dem Lösen des fixierten Befestigungssystems 1 ein erneutes Aufweiten der Aufnahmehülse 5 für eine Umpositionierung eines eingeführten Stangenelements.

Im Bereich des Federrings 10 sind die beiden Teile 9.1 und 9.2 der Aufnahmehülse 5 nach aussen aufgeweitet. Mittels der Aufweitungen ist an dem Teil 9.1 die Stellfläche 11.1 und an dem Teil 9.2 die Stellfläche 11.2 ausgebildet. Die Stellflächen 11.1 und 11.2 bilden zusammen eine im Wesentlichen trichterförmige Ausgestaltung. Das Betätigungselement 4 weist an der, der Aufnahmehülse 5 zugewandeten Seite Betätigungsflächen 12.1, bzw. 12.2 auf, die mit den Stellflächen 11.1 und 11.2 in Eingriff stehen. Die Betätigungsflächen 12.1 und 12.2 weisen zusammen im Wesentlichen die Form eines Innenkonuses auf. Das Betätigungselement 4 ist mit einem Aussengewinde 14 versehen, das mit dem, am Anschlag 3 ausgebildeten Innengewinde 15 zusammenwirkt. An der Aufnahmehülse 5 ist, beispielsweise mittels einer Stanzung oder eines Schnitts mit einer Blechschere, ein Vorsprung 16 ausgeformt, der die Aufnahmehülse 5 mit dem Betätigungselement 4 verspannt. Damit wird das Hintergreifteil 2 in einem Abstand X zu dem Anschlag 3 gehalten, der ein Einführen und Verdrehen des Hintergreifteils z. B. in eine Montageschiene 21 ermöglicht.

In Fig. 1b ist das in Fig. 1a gezeigte Befestigungssystem im verspannten Zustand dargestellt. Das Befestigungssystem wird in die Montageschiene 21 eingeführt und das Hintergreifteil 2 derart im Inneren der Montageschiene 21 verdreht, dass das Hintergreifteil 2 die im Innern der Montageschiene 21 vorgesehenen Haltevorsprünge 22.1 und 22.2 hintergreifen kann. Durch Drehen des Betätigungsmittels 4 in die, durch das Gewinde 14 bestimmte Drehrichtung, z. B. nach links, wird über die Aufnahmehülse 5 das Hintergreifteil 2 in Richtung der Haltevorsprünge 22.1 und 22.2 angehoben, bis sich das Hintergreifteil 2 und die Haltevorsprünge 22.1 und 22.2 leicht verspannen. Vor diesem Vorgang oder zum jetzigen Zeitpunkt wird die Gewindestange 23 (hier strichpunktiert dargestellt) in die Aufnahmehülse 5 des Befestigungssystems 1 eingeführt. Durch weiteres Drehen nach links hebt sich das Betätigungselement 4 aus dem Anschlag 3 hervor. Dabei wird einerseits das Hintergreifteil 2 vollständig mit den Haltevorsprüngen 22.1 und 22.2 der Montageschiene 21 verspannt und andererseits die Aufnahmehülse 5 von der Aufnahmestellung in die Eingreifstellung überführt. Die an der Aufnahmehülse 5 ausgebildeten Gewindeabschnitte 24.1 und 24.2 greifen in das Gewinde der Gewindestange 23 ein.

Zur Justierung der Gewindestange 23 wird das Betätigungselement in Gegenrichtung, bei dieser Ausführungsform nach rechts gedreht und senkt sich dabei erneut in den Anschlag 3 ab. Die Entspannung des Befestigungssystems 1 mit Unterstützung des Federrings 10 ermöglicht ein Aufweiten der Aufnahmehülse 5 insbesondere im Bereich der Gewindeabschnitte 24.1 und 24.2, so dass die Gewindestange 23 in Richtung deren Längsachse umpositioniert werden kann. Sobald die gewünschte Position der Gewindestange 23 erreicht ist, wird das Betätigungselement 4 erneut nach links gedreht, wobei sich das Betätigungselement 5 erneut gegenüber dem Anschlag 3 anhebt und die Gewindeabschnitte 24.1 und 24.2 an der Aufnahmehülse 5 wieder mit der Gewindestange 23 zu deren Fixierung in Eingriff bringt.

Fig. 2 zeigt eine Ansicht auf das Befestigungssystem entlang der Linie II-II in Fig. 1b. Das Betätigungselement 4 weist an dessen Aussenseite eine metrische oder zöllige Sechskant-Ausgestaltung auf, so dass das Betätigungselement 4 mit einem handelsüblichen Schlüssel betätigbar ist.

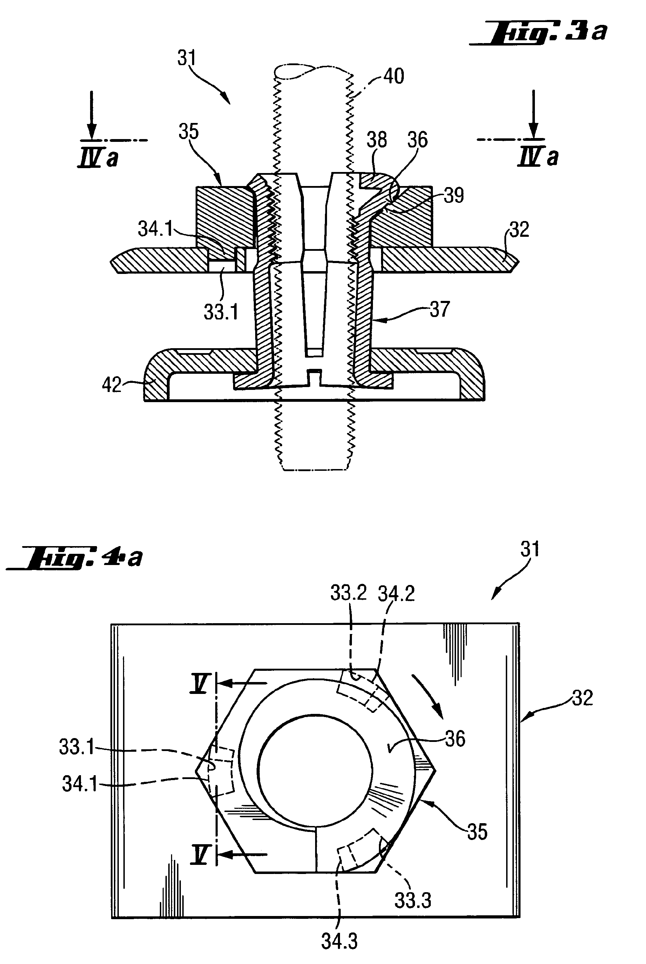

Fig. 3a stellt einen Schnitt durch ein zweites Ausführungsbeispiel des erfindungsgemässen Befestigungssystems im offenen Zustand dar. Das Befestigungssystem 31 umfasst im Wesentlichen die gleichen Elemente wie das in Fig. 1a und 1 b beschriebene Befestigungssystem 1. Im Gegensatz dazu sind am Anschlag 32 Ausnehmungen 33.1, 33.2 und 33.3 vorgesehen, in die, an dem Betätigungselement 35 ausgebildete Nocken 34.1, 34.2 und 34.3 eingreifen. Das Betätigungselement 35 weist eine spiralförmig verlaufende, ansteigende Betätigungsfläche 36 auf. An der Aufnahmehülse 37 ist nur ein kleiner Bereich 38 als Stellfläche 39 zur Überführung der Aufnahmehülse 37 von der ersten Stellung zur Aufnahme der Gewindestange 40 (hier strichpunktiert dargestellt) in die zweite Stellung zur Fixierung der Gewindestange 40 mittels des Betätigungselements 35 ausgebildet.

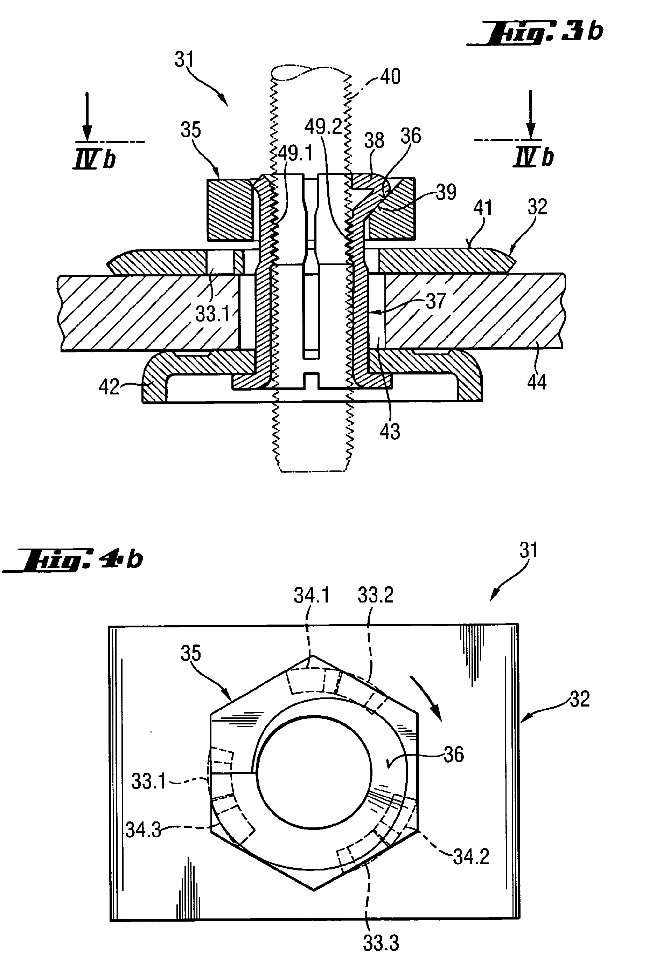

In Fig. 4a ist eine Ansicht auf das Befestigungssystem 31 entlang der Linie IVa-IVa in Fig. 3a gezeigt. In der ersten Stellung des Befestigungssystems stehen die Nocken 34.1, 34.2 und 34.3 des Betätigungselements 35 mit den Ausnehmungen 33.1, 33.2 und 33.3 des Anschlags 32 in Eingriff.

Fig. 3b stellt das in Fig. 3a gezeigte Befestigungssystem 31 im verspannten Zustand dar. Beispielsweise durch eine Rechtsdrehung des Betätigungselements 35 werden die Nocken 34.1, 34.2 und 34.3 aus den Ausnehmungen 33.1, 33.2 und 33.3 gezwungen und gleiten auf der Oberfläche 41 des Anschlags 32. Dadurch hebt sich das Betätigungselement 35 aus dem Anschlag 32 hervor, wodurch sich einerseits das in die Montageöffnung 43 der Platte 44 eingeführte und relativ zum Anschlag 32 verdrehte Hintergreifteil 42 mit der Platte 44 verspannt und andererseits die Gewindeabschnitte 49.1 und 49.2 der Aufnahmehülse 37 von der ersten Stellung in die zweite Stellung gezwungen werden.

In Fig. 4b ist eine Ansicht auf das Befestigungssystem 31 entlang der Linie IVb-IVb in Fig. 3b gezeigt. In dieser Darstellung sind die, zu den Ausnehmungen 33.1, 33.2 und 33.3 versetzten Nocken 34.1, 34.2 und 34.3 gestrichelt dargestellt. Des Weiteren ist die Verdrehung der Betätigungsfläche 36 gegenüber der Darstellung in der Fig. 4a ersichtlich.

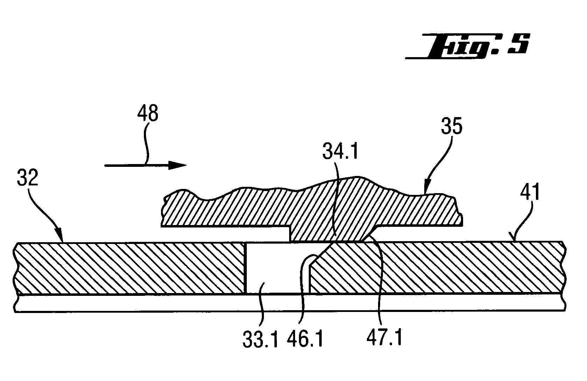

Ein Detailschnitt nach der Linie V-V in Fig. 4a ist in Fig. 5 dargestellt. Der Detailschnitt zeigt zur besseren Verständlichkeit des Zusammenwirkens der Ausnehmung 33.1 mit der Nocke 34.1 einen Ausschnitt des Anschlags 32 und einen Ausschnitt des Betätigungselements 35. Damit der Eingriff der Nocke 34.1 mit der Ausnehmung 33.1 bei der Betätigung des Betätigungselements 35 leicht lösbar ist, weist die Ausnehmung 33.1 eine Abflachung 46.1 auf und die Nocke 34.1 weist eine auf die Abflachung 46.1 abgestimmte, rampenähnliche Abflachung 47.1 auf. Bei der Drehung des Betätigungselements 35 in Richtung des Pfeils 48 gleitet die Nocke 34.1 aus der Ausnehmung 33.1 und liegt anschliessend auf der Oberfläche 41 des Anschlags 32 auf.

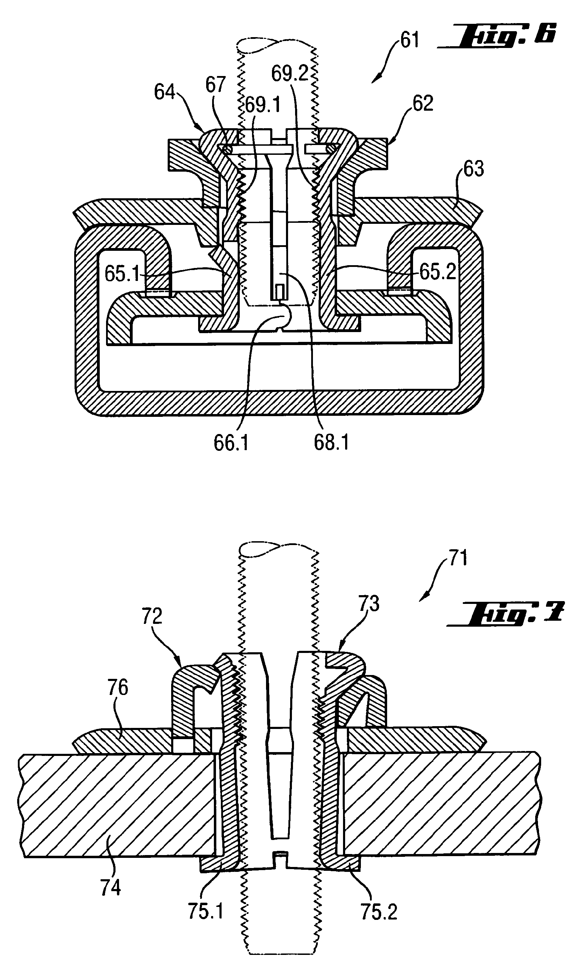

In Fig. 6 ist ein Schnitt durch ein weiteres Ausführungsbeispiel des erfindungsgemässen Befestigungssystems im verspannten Zustand gezeigt. An dem Betätigungselement 62 des Befestigungssystems 61 ist eine Kurvenkontur ausgebildet, die in die komplementär zu dieser Kurvenkontur ausgebildeten Kurvenkontur an dem Anschlag 63 eingreift. Bei der Betätigung des Betätigungselements 62 gleitet dieses auf den Kurvenkonturen. Durch deren Ausbildungen hebt sich das Betätigungselement 62 aus dem Anschlag 63, wobei über den Eingriff des Betätigungselements 62 mit der Aufnahmehülse 64 die Gewindeabschnitte 69.1 und 69.2 von der ersten Stellung in die zweite Stellung überführt werden.

Die in Fig. 6 dargestellte mehrteilige Aufnahmehülse 64 ist aus zwei Teilen 65.1 und 65.2 zusammengesetzt. Mittels den beispielsweise gelöteten Überlappungen 66.1 sind die Teile 65.1 und 65.2 der Aufnahmehülse 64 in Setzungsrichtung des Befestigungssystem 61 federnd miteinander verbunden. die einzelnen Teile der Aufnahmehülse sind wenigstens mittels zumindest einem Federmittel verbunden, wobei die einzelnen Teile zueinander zur Schaffung zumindest eines Schlitzes 68.1 beabstandet sind. An dem, der Setzungsrichtung abgewandten Ende der mehrteilige Aufnahmehülse 64 ist zum Halten der Eingreifmittel der Aufnahmehülse 64 in der ersten Stellung innenseitig der Federring 67 vorgesehen ist.

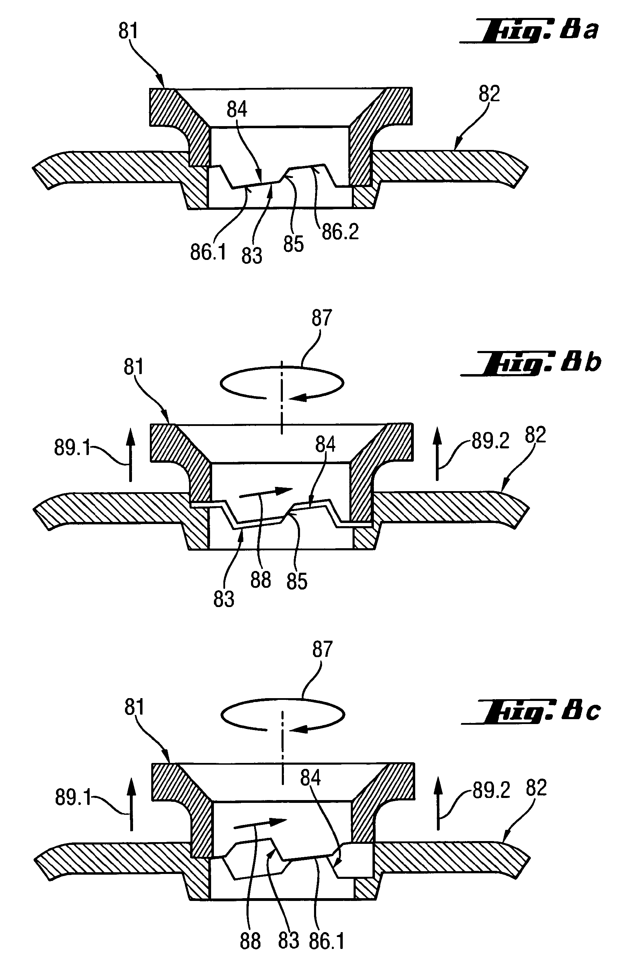

In Fig. 7 ist ein Schnitt durch ein weiteres Ausführungsbeispiel des erfindungsgemässen Befestigungssystems im offenen Zustand dargestellt. Das Befestigungssystem 71 ist aus einfach herstellbaren Blechteilen gefertigt und stellt somit eine kostengünstige Alternative zu den zuvor dargelegten Ausführungsbeispielen dar. Das Betätigungselement 72 ist mittels Nocken, die in der Aufnahmestellung der Aufnahmehülse 73 mit Ausnehmungen im Anschlag 76 in Eingriff stehen, bei Betätigung des Betätigungselements 72 axial versetzbar. Die Funktionsweise dieser Ausführungsform des Betätigungselements 72 entspricht im Wesentlichen der Funktionsweise des in den Fig. 3a und 3b sowie Fig. 4a und 4b dargestellten Betätigungselements 35 des Befestigungssystems 31.

An dem Befestigungssystem 71 ist zum Hintergreifen der Platte 74, im Gegensatz zu den zuvor beschriebenen Ausführungsformen des erfindungsgemässen Befestigungssystems, kein Hintergreifteil vorgesehen. An der Aufnahmehülse 73 sind zwei flanschartig ausgebildete, nach aussen gerichtete Halteabschnitte 75.1 und 75.2 ausgeformt, die bei der Verspannung des Befestigungssystems 71 die Platte 74 hintergreifen. Damit das Befestigungssystem 71 in die Montageöffnung in der Platte 74 eingeführt werden kann und die Halteabschnitte 75.1 und 75.2 nach einer Drehung zumindest der Aufnahmehülse 73 hintergreifen können, sind die Halteabschnitte 75.1 und 75.2 nur an zwei, diametral gegenüberliegenden Bereichen des äusseren Umfangs der Aufnahmehülse am in Setzungsrichtung des Befestigungssystems 71 liegenden Ende ausgebildet. Beim Betätigen des Betätigungselements 72 wird die Aufnahmehülse 73 angehoben und die Halteabschnitte 75.1 und 75.2 verspannen sich im Hintergreifbereich der Ränder der Montageöffnung in der Platte 74.

Jeweils einen Schnitt durch ein Betätigungselement und einen Anschlag mit einer Kurvenkontur in drei verschiedenen Positionen des Betätigungselements ist in den Fig. 8a-c gezeigt. Fig. 8a zeigt das Betätigungselement 81 in der Position am Anschlag 82, in der sich eine Aufnahmehülse in der ersten Stellung befindet. An dem Betätigungselement 81 ist eine Kurvenkontur 83 ausgebildet, die mit einer komplementär zu der Kurvenkontur 83 ausgebildeten Kurvenkontur 84 an dem Anschlag 82 zusammenwirkt. Der grosse Weg zum Überführen der Eingreifmittel der Aufnahmehülse von der ersten Stellung in die zweite Stellung wird über den grossen Steigungswinkel des Kurvenkonturabschnitts 85 erreicht. Der Ausgleich einer allfälligen Gewindetoleranz und das Fixieren des, in die Aufnahmehülse eingesetzten Stangenelements wird mit der flachen Steigung des Kurvenkonturabschnitts 86.1 und 86.2 vorgenommen. Die flache Steigung der Kurvenkonturabschnitte 86.1 und 86.2 beträgt beispielsweise weniger als 8° gegenüber einer Horizontalen.

Durch eine Rechtsdrehung (Pfeil 87) wird das Betätigungselement 81 aus der Ruhestellung bewegt (Pfeil 88) und hebt sich gegenüber dem Anschlag 82 an (Pfeile 89.1 und 89.2), was in Fig. 8b dargestellt ist. Durch eine weitere Drehung in Richtung des Pfeils 87 wird das Befestigungselement 81 weiter aus dem Anschlag 82 hervorgehoben, so dass die mit dem Betätigungselement 81 in Eingriff gebrachte Aufnahmehülse von der Aufnahmestellung in die Fixierungsstellung überführt und somit mit dem angeordneten Stangenelement verspannt wird. Mit der flachen Steigung der Kurvenkonturabschnitte 86.1 und 86.2 kann die erforderliche Klemmkraft der Aufnahmehülse auf das Stangenelement aufgebracht werden. Des Weiteren ist ein selbstständiges Lösen dieser Klemmverbindung durch die Selbsthemmung der Kurvenkontur 83 mit der Kurvenkontur 84 verhindert.

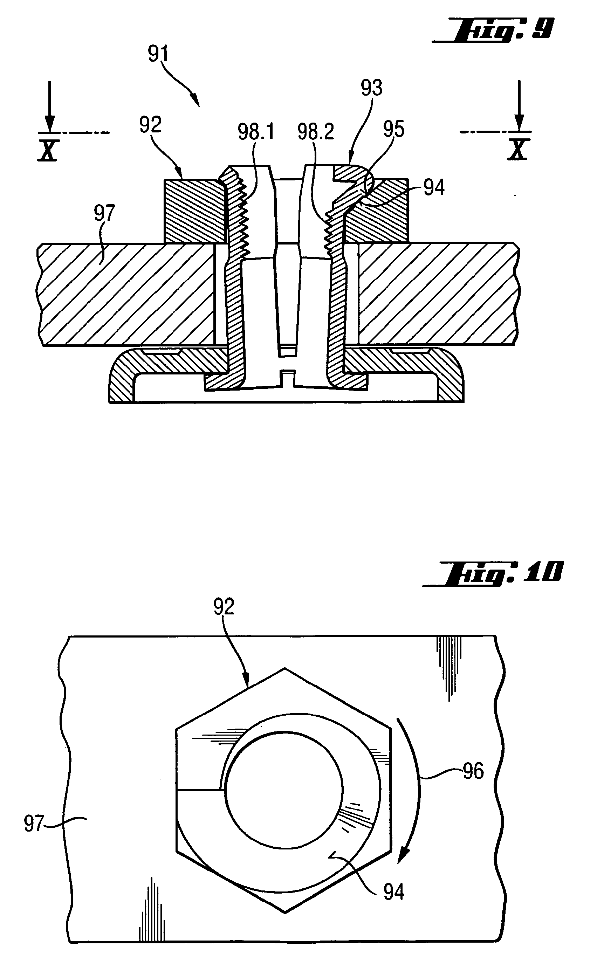

Fig. 9 stellt einen Schnitt durch ein weiteres Ausführungsbeispiel des erfindungsgemässen Befestigungssystems im offenen Zustand dar. Bei dem Befestigungssystem 91 erfolgt bei der Betätigung des Betätigungselements 92 kein axialer Versatz parallel zur Längsachse der Aufnahmehülse 93 des Betätigungselements 92. Das Betätigungselement 92 weist eine spiralförmig ausgebildete Betätigungsfläche 94 auf, die mit der Stellfläche 95 der Aufnahmehülse 93 in Eingriff steht. Durch Drehen des Betätigungselements 92 in Richtung des Pfeils 96 werden die Gewindeabschnitte 98.1 und 98.2 der Aufnahmehülse 93 von der ersten Stellung in die zweite Stellung überführt. Zwischen dem Betätigungselement 92 und dem Bauteil 97 kann zur Verbesserung der Drehbarkeit des Betätigungselements 92 eine Gleitschicht vorgesehen werden. Bei dieser Ausführungsform des Befestigungssystems 91 wurde auf die Anordnung eines Anschlags verzichtet, da das Betätigungselement 92 auch direkt auf der Aussenseite des Bauteils 97 angeordnet ist. In einer Variante zu der beschriebenen Ausführungsform des Befestigungssystems 91 kann auch dieses einen Anschlag zur stirnseitigen Beaufschlagung des Bauteils 97 umfassen.

Eine Ansicht auf das Befestigungssystem 91 entlang der Linie X-X in Fig. 9 ist in Fig. 10 gezeigt. Die dargestellte Betätigungsfläche 94 ist für eine Drehrichtung des Betätigungselements 92 in Uhrzeigersinn ausgebildet. Ist eine Drehrichtung des Betätigungselements 92 gegen den Uhrzeigersinn gewünscht, beziehungsweise erforderlich, wird die Betätigungsfläche 94 entsprechend gespiegelt an dem Betätigungselement 92 ausgebildet.

Zusammenfassend ist festzustellen, dass mit dem erfindungsgemässen Befestigungssystem eine genaue Justierung des Stangenelements bei einem hohem Lastniveau der Befestigung ermöglicht wird. Bei der Verspannung des Befestigungssystems ist ein axialer Versatz des zu fixierenden Stangenelements ausgeschlossen. Ausserdem ist das erfindungsgemässe Befestigungssystem vielseitig anwendbar.

## Patentansprüche

1. Befestigungssystem zum Befestigen eines Stangenelements in einer Montageöffnung eines Bauteils (44; 74; 97), insbesondere zum Befestigen einer Gewindestange (23; 40) in einer Montageöffnung eines Hohlkörpers (21), mit einer Aufnahmehülse (5; 37; 64; 73; 93) zur Aufnahme des Stangenelements (23; 40), wobei die Aufnahmehülse (5; 37; 64; 73; 93) Eingreifmittel (24.1, 24.2; 49.1, 49.2; 69.1, 69.2; 98.1, 98.2) für den Eingriff an dem Stangenelement (23; 40) aufweist, wobei die Aufnahmehülse (5; 37; 64; 73; 93) mittels eines Betätigungselements (4; 35; 62; 72; 81; 92) zur Induzierung einer im Wesentlichen radialen Bewegung der Eingreifmittel (24.1, 24.2; 49.1, 49.2; 69.1, 69.2; 98.1, 98.2) der Aufnahmehülse (5; 37; 64; 73; 93) von einer ersten Stellung zur Aufnahme des Stangenelements (23; 40) in eine zweite Stellung zur Befestigung des Stangenelements (23; 40) überführbar ist, **dadurch gekennzeichnet, dass** die Aufnahmehülse (5;37;64;73;93) am in Setzrichtung des Befestigungssystems (1;31;61;71;91) liegenden Ende zumindest einen Halteabschnitt (6;75.1,75.2) aufweist.

2. Befestigungssystem nach Anspruch 1, **dadurch gekennzeichnet, dass** die Aufnahmehülse (5; 37; 64; 73; 93) zumindest bereichsweise eine Stellfläche (11.1, 11.2; 39; 95) aufweist und das Betätigungselement (4; 35; 62; 72; 81; 92) zumindest bereichsweise eine Betätigungsfläche (12.1, 12.2; 36; 94) aufweist, wobei die Stellfläche (11.1, 11.2; 39; 95) mit der Betätigungsfläche (12.1, 12.2; 36; 94) in Eingriff bringbar ist zur Induzierung der im Wesentlichen radialen Bewegung der Eingreifmittel (24.1, 24.2; 49.1, 49.2; 69.1, 69.2; 98.1, 98.2) der Aufnahmehülse (5; 37; 64; 73; 93) von der ersten Stellung in die zweite Stellung.

3. Befestigungssystem nach Anspruch 1 oder 2, **dadurch gekennzeichnet, dass** das Betätigungselement (4; 35; 62; 72; 81) parallel zur Längsachse der Aufnahmehülse (5; 37; 64; 73) versetzbar ist.

4. Befestigungssystem nach einem der Ansprüche 1 bis 3, **dadurch gekennzeichnet, dass** das Bauteil eine C-förmige Montageschiene (21) umfasst.

5. Befestigungssystem nach einem der Ansprüche 1 bis 4, **dadurch gekennzeichnet, dass** das Befestigungssystem (1; 31; 61; 91) ein Hintergreifteil (2; 42) zum Einführen in eine Montageöffnung des Bauteils (21; 44; 74; 97) und zum Hintergreifen von dem Bauteil (44; 74; 97), oder optional in, beziehungsweise an dem Bauteil (21) vorgesehenen Halteelementen (22.1, 22.2), umfasst.

6. Befestigungssystem nach einem der Ansprüche 1 bis 5, **dadurch gekennzeichnet, dass** das Befestigungssystem (1; 31; 61; 71) einen Anschlag (3; 32; 63; 76; 82) zur stimaussenseitigen Beaufschlagung des Bauteils (74), insbesondere der, eine Montageöffnung des Hohlkörpers (21) begrenzende Ränder der Hohlkörperaussenseiten, umfasst.

7. Befestigungssystem nach einem der Ansprüche 3 bis 6, **dadurch gekennzeichnet, dass** das Betätigungselement (4) zu dessen axialer Versetzung ein Gewinde (14) aufweist, das optional mit einem Gewinde (15) am Anschlag (3) zusammenwirkt.

8. Befestigungssystem nach einem der Ansprüche 3 bis 6, **dadurch gekennzeichnet, dass** das Betätigungselement (35; 62; 72; 81) zu dessen axialer Versetzung eine Kurvenkontur (34.1, 34.2, 34.3; 83) aufweist, die optional mit einer Kurvenkontour (33.1, 33.2, 33.3; 84) am Anschlag (32; 63; 76; 82) zusammenwirkt.

9. Befestigungssystem nach einem der Ansprüche 2 bis 8, **dadurch gekennzeichnet, dass** die Stellfläche (39; 95) und/oder die Betätigungsfläche (36; 94) als ansteigende und/oder abfallende Fläche, optional als spiralförmig verlaufende Fläche, ausgebildet ist.

10. Befestigungssystem nach einem der Ansprüche 2 bis 9, **dadurch gekennzeichnet, dass** die Stellfläche (11.1, 11.2) und/oder die Betätigungsfläche (12.1, 12.2) eine Schrägfläche aufweist, wobei optional die Stellfläche (11.1, 11.2) und die Betätigungsfläche (12.1, 12.2) komplementär zueinander ausgebildete Schrägflächen sind, zur Umsetzung einer axialen Bewegung des Betätigungselements (4) in eine im Wesentlichen radiale Bewegung der Eingreifmittel (24.1, 24.2) der Aufnahmehülse (5).

11. Befestigungssystem nach einem der Ansprüche 1 bis 10, **dadurch gekennzeichnet, dass** an dem Betätigungselement (4; 35; 62; 72; 81; 92) ein Drehmomentübertragungsmittel vorgesehen ist und, dass optional das Betätigungselement (4; 35; 62; 72; 81; 92) aussenseitig an der Aufnahmehülse (5; 37; 64; 73; 93) angeordnet ist.

12. Befestigungssystem nach einem der Ansprüche 1 bis 11, **dadurch gekennzeichnet, dass** die Aufnahmehülse (5; 37; 73; 93) einteilig ausgebildet ist und zumindest einen, in Einführrichtung des Befestigungssystems (1; 31; 71; 91) verlaufenden Schlitz (7.1, 7.2) sowie zumindest einen federnden Steg (8.1) aufweist, und optional ein Federelement (10) zum Halten der Aufnahmehülse (5; 37; 73; 93) in der ersten Stellung umfasst.

13. Befestigungssystem nach einem der Ansprüche 1 bis 11, **dadurch gekennzeichnet, dass** die Aufnahmehülse (64) mehrteilig ausgebildet ist und die einzelnen Teile (65.1, 65.2) der Aufnahmehülse (64) wenigstens mittels zumindest einem Federmittel (67) verbunden sind, wobei die einzelnen Teile (65.1, 65.2) zueinander zur Schaffung zumindest eines Schlitzes (68.1) beabstandet sind.

14. Befestigungssystem nach Anspruch 12 oder 13, **dadurch gekennzeichnet, dass** der Anschlag (3; 32; 63; 76; 82) und/oder das Hintergreifteil (2; 42) zumindest ein Rastelement (13.1) aufweist, wobei das zumindest eine Rastelement (13.1) zur Verdrehsicherung der Elemente des Befestigungssystems (1; 31; 61; 71; 91) zueinander mit dem zumindest einen Schlitz (7.1, 7.2; 68.1) der Aufnahmehülse (5; 37; 64; 73; 93) in Eingriff bringbar ist.

## Claims

1. Fastening system for fastening a rod element in a mounting hole of a member (44; 74; 97), particularly for fastening a threaded rod (23, 40) in a mounting hole of a hollow body (21), with a receiving collar (5; 37; 64; 73; 93) for receiving the rod element (23; 40), in which the receiving collar (5; 37; 64; 73; 93) has engaging means (24.1, 24.2; 49.1, 49.2; 69.1, 69.2; 98.1, 98.2) for engaging on the rod element (23; 40), in which the receiving collar (5; 37; 64; 73; 93) can be moved from a first position for receiving the rod element (23; 40) into a second position for fastening the rod element (23; 40) by means of an actuator (4; 35; 62; 72; 81; 92) in order to induce an essentially radial movement of the engaging means (24.1, 24.2; 49.1, 49.2; 69.1, 69.2; 98.1, 98.2) of the receiving collar (5; 37; 64; 73; 93), **characterised in that** the receiving collar (5; 37; 64; 73; 93) has at least one holding section (6; 75.1, 75.2) at the end located in the setting direction of the fastening system (1; 31; 61; 71; 91).

2. Fastening system according to claim 1, **characterised in that** the receiving collar (5; 37; 64; 73; 93) has a support surface (11.1, 11.2; 39; 95) at least in places and the actuator (4; 35; 62; 72; 81; 92) has an actuating surface (12.1, 12.2; 36; 94) at least in places, in which the support surface (11.1, 11.2; 39; 95) can be brought to engage with the actuating surface (12.1, 12.2; 36; 94) in order to induce the essentially radial movement of the engaging means (24.1, 24.2; 49.1, 49.2; 69.1, 69.2; 98.1, 98.2) of the receiving collar (5; 37; 64; 73; 93) from the first position into the second position.

3. Fastening system according to claim 1 or 2, **characterised in that** the actuator (4; 35; 62; 72; 81) can be moved parallel to the longitudinal axis of the receiving collar (5; 37; 64; 73).

4. Fastening system according to one of claims 1 to 3, **characterised in that** the member includes a C-shaped mounting rail (21).

5. Fastening system according to one of claims 1 to 4, **characterised in that** the fastening system (1; 31; 61; 71; 91) includes a rear engagement element (2, 42) for insertion into a mounting hole of the member (21; 44; 74; 97) and for rear engagement from the member (44; 74; 97) or optionally in or on the holding elements (22.1, 22.2) with which the member (21) is provided.

6. Fastening system according to one of claims 1 to 5, **characterised in that** the fastening system (1; 31; 61; 71) includes a stop (3; 32; 63; 76; 82) for impacting the exterior of the end of the member (74), in particular the edges of the exterior of the hollow body delimiting a mounting hole of the hollow body (21).

7. Fastening system according to one of claims 3 to 6, **characterised in that** the actuator (4) has a thread (14) to offset it axially, which optionally works together with a thread (15) on the stop (3).

8. Fastening system according to one of claims 3 to 6, **characterised in that** the actuator (35; 62; 72; 81) has a curved contour (34.1, 34.2, 34.3; 83) to offset it axially, which optionally works together with a curved contour (33.1, 33.2, 33.3; 84) on the stop (32; 63; 76; 82).

9. Fastening system according to one of claims 2 to 8, **characterised in that** the support surface (39; 95) and / or the actuating surface (36; 94) is made as a rising and / or falling surface, optionally as a surface with a spiral course.

10. Fastening system according to one of claims 2 to 9, **characterised in that** the support surface (11.1, 11.2) and / or the actuating surface (12.1. 12.2) has a sloped surface, in which the support surface (11.1, 11.2) and the actuating surface (12.1. 12.2) are optionally sloped surfaces designed as complementary to each other, in order to convert an axial movement of the actuator (4) into an essentially radial movement of the engaging means (24.1, 24.2) of the receiving collar (5).

11. Fastening system according to one of claims 1 to 10, **characterised in that** a torque transmission means is provided on the actuator (4; 35; 62; 72; 81; 92) and that optionally the actuator (4; 35; 62; 72; 81; 92) is arranged on the outside on the receiving collar (5; 37; 64; 73; 93).

12. Fastening system according to one of claims 1 to 11, **characterised in that** the receiving collar (5; 37; 73; 93) is made as one piece and has at least one slot (7.1, 7.2) running in the insertion direction of the fastening system (1; 31; 71; 91) as well as at least one spring stud (8.1) and optionally one spring element (10) for holding the receiving collar (5; 37; 73; 93) in the first position.

13. Fastening system according to one of claims 1 to 11, **characterised in that** the receiving collar (64) is made is several parts and the individual parts (65.1, 65.2) of the receiving collar (64) are connected by at least one spring element (67), in which the individual parts (65.1, 65.2) are mutually spaced in order to produce at least one slot (68.1).

14. Fastening system according to claim 12 or 13, **characterised in that** the stop (3; 32; 63; 76; 82) and / or the rear engagement element (2, 42) has at least one detent element (13.1), in which at least one detent element (13.1) can be brought to engage with at least one slot (7.1, 7.2; 68.1) of the receiving collar (5; 37; 64; 73; 93), in order to prevent twisting together of the elements of the fastening system (1; 31; 61; 71; 91).

## Revendications

1. Système de fixation pour la fixation d'un élément de tige dans une ouverture de montage d'un élément de construction (44 ; 74 ; 97), en particulier pour la fixation d'une tige filetée (23 ; 40) dans une ouverture de montage d'un corps creux (21), avec un manchon de réception (5 ; 37 ; 64 ; 73 ; 93) pour recevoir l'élément de tige (23 ; 40), le manchon de réception (5 ; 37 ; 64 ; 73 ; 93) comportant des moyens d'engagement (24.1, 24.2 ; 49.1, 49.2 ; 69.1, 69.2 ; 98.1, 98.2) pour venir en prise avec l'élément de tige (23 ; 40), le manchon de réception (5 ; 37 ; 64 ; 73 ; 93) étant transférable d'une première position pour recevoir l'élément de tige (23 ; 40) à une deuxième position pour fixer l'élément de tige (23 ; 40) au moyen d'un élément d'actionnement (4 ; 35 ; 62 ; 72 ; 81 ; 92) permettant d'induire un déplacement sensiblement radial des moyens d'engagement (24.1, 24.2 ; 49.1, 49.2 ; 69.1, 69,2 ; 98.1, 98.2) du manchon de réception (5 ; 37 ; 64 ; 73 ; 93), **caractérisé en ce que**, à son extrémité située dans la direction de scellement du système de fixation (1 ; 31 ; 61 ; 71 ; 91), le manchon de réception (5 ; 37 ; 64 ; 73 ; 93) comporte au moins une portion de retenue (6 ; 75.1, 75.2).

2. Système de fixation selon la revendication 1, **caractérisé en ce que** le manchon de réception (5 ; 37 ; 64 ; 73 ; 93) comporte au moins par endroits une surface d'appui (11.1, 11.2, 39 ; 95), et l'élément d'actionnement (4 ; 35 ; 62 ; 72 ; 81 ; 92) comporte au moins par endroits une surface d'actionnement (12.1, 12.2 ; 36 ; 94), la surface d'appui (11.1, 11.2, 39 ; 95) pouvant être amenée au contact de la surface d'actionnement (12.1, 12.2 ; 36 ; 94) pour induire le déplacement sensiblement radial des moyens d'engagement (24.1, 24.2 ; 49.1, 49.2 ; 69.1, 69,2 ; 98.1, 98.2) du manchon de réception (5 ; 37 ; 64 ; 73 ; 93) de la première position à la deuxième position.

3. Système de fixation selon la revendication 1 ou 2, **caractérisé en ce que** l'élément d'actionnement (4 ; 35 ; 62 ; 72 ; 81) est déplaçable parallèlement à l'axe longitudinal du manchon de réception (5 ; 37 ; 64 ; 73).

4. Système de fixation selon une des revendications 1 à 3, **caractérisé en ce que** l'élément de construction comprend un rail de montage en forme de C (21).

5. Système de fixation selon une des revendications 1 à 4, **caractérisé en ce que** le système de fixation (1 ; 31 ; 61 ; 91) comprend une pièce de retenue arrière (2 ; 42) à introduire dans une ouverture de montage de l'élément de construction (21 ; 44 ; 74 ; 97) et à engager derrière l'élément de construction (44 ; 74 ; 97) ou optionnellement dans, respectivement contre des éléments de retenue (22.1, 22.2) prévus sur l'élément de construction (21).

6. Système de fixation selon une des revendications 1 à 5, **caractérisé en ce que** le système de fixation (1 ; 31 ; 61 ; 71) comprend une butée (3 ; 32 ; 63 ; 76 ; 82) destinée à coopérer avec le côté frontal extérieur de l'élément de construction (74), en particulier avec les bords, pourvus d'une ouverture de montage du corps creux (21), des côtés extérieurs du corps creux.

7. Système de fixation selon une des revendications 3 à 6, **caractérisé en ce que** l'élément d'actionnement (4) comporte, pour son déplacement axial, un filetage (14) qui, optionnellement, coopère avec le filetage (15) de la butée (3).

8. Système de fixation selon une des revendications 3 à 6, **caractérisé en ce que** l'élément de fixation (35 ; 62 ; 72 ; 81) comporte, pour son déplacement axial, un contour curviligne (34.1, 34.2, 34.3 ; 83) qui, optionnellement, coopère avec le contour curviligne (33.1, 33.2, 33.3 ; 84) de la butée (32 ; 63 ; 76 ; 82).

9. Système de fixation selon une des revendications 2 à 8, **caractérisé en ce que** la surface d'appui (39 ; 95) et/ou la surface d'actionnement (36 ; 94) est conformée en surface ascendante et/ou descendante, optionnellement en surface en spirale.

10. Système de fixation selon une des revendications 2 à 9, **caractérisé en ce que** la surface d'appui (11.1, 11.2) et/ou la surface d'actionnement (12.1, 12.2) comporte une surface inclinée, la surface d'appui (11.1, 11.2) et la surface d'actionnement (12.1, 12.2) étant optionnellement des surfaces inclinées de conformation mutuellement complémentaire pour convertir un déplacement axial de l'élément d'actionnement (4) en un déplacement sensiblement radial des moyens d'engagement (24.1, 24.2) du manchon de réception (5).

11. Système de fixation selon une des revendications 1 à 10, **caractérisé en ce que** sur l'élément d'actionnement (4 ; 35 ; 62 ; 72 ; 81 ; 92) est prévu un moyen de transmission de couple, et **en ce qu'**optionnellement l'élément d'actionnement (4 ; 35 ; 62 ; 72 ; 81 ; 92) est disposé extérieurement sur le manchon de réception (5 ; 37 ; 64 ; 73 ; 93).

12. Système de fixation selon une des revendications 1 à 11, **caractérisé en ce que** le manchon de réception (5 ; 37 ; 73 ; 93) est conçu d'un seul tenant et pourvu d'au moins une fente (7.1, 7.2) s'étendant dans la direction d'introduction du système de fixation (1; 31 ; 71 ; 91) ainsi que d'au moins une barrette élastique (8.1) et comprend optionnellement un élément de ressort (10) pour maintenir le manchon de réception (5 ; 37 ; 73 ; 93) dans la première position.

13. Système de fixation selon une des revendications 1 à 11, **caractérisé en ce que** le manchon de réception (64) est conformé en plusieurs parties, et les différentes parties (65.1, 65.2) du manchon de réception (64) sont reliées au moins au moyen d'au moins un moyen élastique (67), les différentes parties (65.1, 65.2) étant distantes les unes des autres pour créer au moins une fente (68.1).

14. Système de fixation selon la revendication 12 ou 13, **caractérisé en ce que** la butée (3 ; 32 ; 63 ; 76 ; 82) et/ou la pièce de retenue arrière (2 ; 42) comporte au moins un élément d'encliquetage (13.1), l'élément d'encliquetage au nombre d'au moins un (13.1) pouvant être amené en prise avec la fente au nombre d'au moins une (7.1, 7.2 ; 68.1) du manchon de réception (5 ; 37 ; 64 ; 73 ; 93) pour bloquer en rotation les éléments du système de fixation (1 ; 31 ; 61 ; 71 ; 91).
